# FASCICULE DE BREVET EUROPEEN

(11) **EP 3 980 584 B1**
(45) Date de publication et mention de la délivrance du brevet: **03.07.2024**
(21) Numéro de dépôt: 20790375.8
(22) Date de dépôt: 25.09.2020
(51) Int. Cl.: C25D 11/02, C25D 11/06, C25D 11/18, C23C 4/11, C23C 28/04, C23C 4/134, B64D 13/06, C23C 4/02, C23C 24/08, C23C 4/12, C23C 24/04, F16K 1/22, F16K 25/00, C25D 11/16

(54) **PROCÉDÉ DE FABRICATION D'UNE PIÈCE RÉSISTANTE AU FEU D'UN SYSTÈME DE CONDITIONNEMENT D'AIR ET PIÈCE OBTENUE PAR UN TEL PROCÉDÉ**
VERFAHREN ZUR HERSTELLUNG EINES FEUERFESTEN TEILS EINES KLIMATISIERUNGSSYSTEMS UND DURCH SOLCH EIN VERFAHREN HERGESTELLTES TEIL
METHOD FOR MANUFACTURING A FIRE-RESISTANT PART OF AN AIR CONDITIONING SYSTEM AND PART PRODUCED BY SUCH A METHOD

(30) Priorité: 27.09.2019 FR 1910750
(43) Date de publication de la demande: 13.04.2022
(73) Titulaire: Liebherr-Aerospace Toulouse SAS, 31200 Toulouse (FR)
(72) Inventeur: CERDA, Hélène, 31016 TOULOUSE Cedex 2 (FR); ROCCHI, Jérôme, 31016 TOULOUSE CEDEX 2 (FR)
(74) Mandataire: Bringer IP
(86) Numéro de dépôt international: PCT/FR2020/051669
(87) Numéro de publication internationale: WO 2021/058916

(56) Documents cités:
- WO-A1-97/05302
- CN-B- 101 306 418
- CN-B- 107 815 196
- US-A1- 2006 013 986
- US-A1- 2017 114 471
- CURRAN J A ET AL: "The thermal conductivity of plasma electrolytic oxide coatings on aluminium and magnesium", SURFACE AND COATINGS TECHNOLOGY, ELSEVIER BV, AMSTERDAM, NL, vol. 199, no. 2-3, 22 septembre 2005 (2005-09-22), pages 177-183, XP027608787, ISSN: 0257-8972 [extrait le 2005-09-22]
- YEROKHIN A L ET AL: "Oxide ceramic coatings on aluminium alloys produced by a pulsed bipolar plasma electrolytic oxidation process", SURFACE AND COATINGS TECHNOLOGY, ELSEVIER BV, AMSTERDAM, NL, vol. 199, no. 2-3, 22 septembre 2005 (2005-09-22), pages 150-157, XP027608784, ISSN: 0257-8972 [extrait le 2005-09-22]

## Description

### Domaine technique de l'invention

L'invention concerne un procédé de fabrication d'une pièce résistante au feu d'un système de conditionnement d'air destiné à équiper un véhicule de transport aérien ou ferroviaire. L'invention concerne aussi une pièce obtenue par le procédé selon l'invention.

### Arrière-plan technologique

Dans le domaine de l'aéronautique, de nombreuses pièces sont soumises à des sollicitations mécaniques sévères et/ou à des environnements exigeants notamment vis-à-vis de températures extrêmes. Ainsi, les pièces installées dans un environnement moteur, c'est-à-dire, dans la nacelle moteur ou au voisinage immédiat du moteur, sur les conduites de prélèvement d'air, et plus précisément les surfaces de ces pièces sont directement impactées.

Les pièces utilisées dans le domaine de l'aéronautique et notamment dans un environnement dans lequel les températures sont élevées sont généralement conçues en acier inoxydable pour leur conférer une résistance à la corrosion et à l'usure. Par exemple, lorsqu'une vanne est fabriquée dans un autre matériau, tel que l'aluminium, pour des raisons par exemple de légèreté ou pour être utilisée dans un environnement de températures basses, elle est protégée par une plaque d'acier permettant de conférer des propriétés similaires à une vanne fabriquée en acier inoxydable.

La publication de la demande US2017/114471 décrit une vanne papillon en alliage d'aluminium traitée par oxydation micro-arcs.

En outre, afin de protéger la surface des pièces en alliage métallique aux fortes températures et en présence de flammes, il serait possible d'appliquer des peintures réfractaires ou des peintures intumescentes.

Toutefois, ces traitements présentent plusieurs inconvénients. Par exemple, les peintures réfractaires contiennent des charges céramiques (alumine, zircone ou silice) permettant de tenir à des températures pouvant atteindre 1700°C. Cependant, étant donné que les charges utilisées dans ces peintures sont des nanoparticules et que les peintures utilisent des solvants souvent visés par le règlement REACH, ces produits sont considérés comme polluants et présentent par conséquent des risques pour l'environnement, l'hygiène et la santé.

Un autre inconvénient réside dans le fait que des défauts d'adhérence de la peinture sur la surface de la vanne peuvent survenir et entrainer l'érosion de la peinture, ce qui annihile la protection de la surface traitée.

En outre, les peintures intumescentes peuvent être utilisées sur de l'acier pour former un film mince, dur et lisse qui à l'exposition d'une température de l'ordre de 400°C se dilate pour former une couche de mousse thermo-isolante. Cette couche de mousse thermo-isolante ne permet pas d'isoler contre le feu et de conférer une résistance vis-à-vis des flammes. Du fait de sa faible conductivité thermique, la montée en température des structures métalliques est retardée. Afin de protéger la pièce il est nécessaire d'appliquer un primaire de protection anticorrosion, une peinture intumescente et une finition, ce qui entraine l'augmentation de l'épaisseur du revêtement qui est comprise entre 250 micromètres et quelques millimètres.

A ce titre, l'invention a pour but de remédier aux inconvénients de l'art antérieur en proposant un procédé de fabrication d'une pièce résistante à la flamme et isolante vis-à-vis de la chaleur dégagée par une flamme.

### Objectifs de l'invention

L'invention vise à fournir un procédé de fabrication d'une pièce résistante au feu.

L'invention vise aussi à fournir une pièce résistante au feu d'un système de conditionnement d'air d'un véhicule de transport aérien ou ferroviaire, qui pallie au moins certains des inconvénients des pièces connues.

L'invention vise aussi à fournir, dans au moins un mode de réalisation, une pièce résistante à la corrosion, d'un système de conditionnement d'air d'un véhicule de transport aérien ou ferroviaire.

L'invention vise aussi à fournir, dans au moins un mode de réalisation, une pièce résistante à l'érosion, d'un système de conditionnement d'air d'un véhicule de transport aérien ou ferroviaire.

L'invention vise aussi à fournir, dans au moins un mode de réalisation, une pièce aussi résistante à l'usure, d'un système de conditionnement d'air d'un véhicule de transport aérien ou ferroviaire.

L'invention vise aussi à fournir un système de conditionnement d'air d'un véhicule de transport aérien ou ferroviaire d'air équipé d'une pièce selon l'invention.

L'invention vise en particulier à fournir un tel système de conditionnement d'air d'un véhicule de transport aérien ou ferroviaire qui présente une masse embarquée plus faible que pour les systèmes connus.

L'invention vise enfin à fournir un véhicule de transport, notamment aérien, équipé d'un système de conditionnement d'air selon l'invention.

### Exposé de l'invention

Pour ce faire, l'invention concerne un procédé de fabrication d'une pièce résistante au feu d'un système de conditionnement d'air d'un véhicule de transport aérien ou ferroviaire.

Un procédé selon l'invention est caractérisé en ce qu'il comprend au moins les étapes suivantes :
- une étape d'obtention d'une pièce comprenant au moins une portion de surface en alliage d'aluminium, et
- une étape de traitement de ladite portion de surface en alliage d'aluminium par Oxydation Micro-Arcs (OMA) en vue de l'obtention d'un revêtement céramique sur ladite portion de surface.

On entend par l'expression « résistant au feu » qu'un matériau peut présenter une conductivité thermique d'une surface de 1dm² inférieure à 10 Watt par mètre-kelvin (W/m/K) et/ou que le matériau sur lequel est appliquée une flamme à 1200°C pendant une durée d'au moins 5 minutes, de préférence une durée comprise entre 5 et 15 minutes, ne présente pas de déformation ni de détérioration après l'exposition à la flamme. Un matériau résistant au feu est également peu conducteur thermiquement et permet de former une barrière isolante vis-à-vis du feu.

Le procédé de fabrication selon l'invention permet d'obtenir une pièce d'un système de conditionnement d'air qui est résistante au feu. Le procédé selon l'invention va à l'encontre des techniques couramment mises en oeuvre aujourd'hui pour obtenir une pièce résistante au feu et qui consistent à privilégier l'acier inoxydable ou à utiliser des peintures spécifiques.

Les inventeurs ont surmonté le préjugé technique selon lequel une pièce en alliage d'aluminium ne peut pas être résistante au feu en prévoyant de traiter la portion de surface en alliage d'aluminium (qui peut correspondre à la totalité de la pièce ou bien à une partie de la pièce uniquement) par une étape de traitement de cette portion de surface par oxydation micro-arcs.

Plus particulièrement, la pièce en alliage d'aluminium est par exemple une vanne formée d'un corps de vanne destiné à être agencé dans une conduite d'air du système de conditionnement d'air et d'un élément obturateur permettant de réguler le flux d'air circulant dans la conduite.

Par exemple, l'ensemble corps de vanne et élément obturateur peut être formé en totalité par un alliage d'aluminium. Selon une variante, uniquement l'élément obturateur peut être formé par un alliage d'aluminium.

Selon l'invention, ladite pièce comprend une portion de surface en alliage d'aluminium revêtue par oxydation micro-arcs avec une conductivité thermique inférieure à 10 W/m/K, de préférence entre 0,5 et 5 W/m/K.

La mise en oeuvre d'un procédé d'oxydation micro-arcs est une solution permettant d'obtenir un équipement combinant des caractéristiques qui habituellement ne sont pas compatibles telles que la tenue feu, la très bonne tenue à la corrosion, la tenue à l'érosion et à l'usure, et le faible impact sur les propriétés en fatigue.

L'utilisation de l'oxydation micro-arcs est particulièrement avantageuse en ce qu'elle est moins polluante et moins onéreuse que les solutions de l'art antérieur utilisant de l'acier inoxydable. L'utilisation d'un procédé d'oxydation micro-arcs va permettre de remplacer les pièces formées en acier inoxydable, qui est un matériau lourd, par un alliage d'aluminium apprécié pour sa légèreté et son faible coût.

Ledit procédé de fabrication comprend une étape d'obtention d'une pièce comprenant au moins une portion de surface en alliage d'aluminium. L'étape d'obtention consiste à être en possession (ou à fabriquer) une pièce comprenant au moins une portion de surface en alliage d'aluminium.

Il est possible que le traitement soit uniquement souhaité sur une portion de ladite pièce. Aussi, il convient d'isoler ou de protéger la partie non traitée en masquant la partie qui n'est pas à traiter afin de l'étanchéifier vis-à-vis de l'électrolyte.

En outre, ledit procédé de fabrication comprend une étape de traitement de ladite portion de surface en alliage d'aluminium par oxydation micro-arcs en vue de l'obtention d'un revêtement céramique sur ladite portion de surface.

L'oxydation micro-arcs appliquée sur une surface en alliage d'aluminium permet l'obtention d'une couche d'oxydes de l'ordre de quelques centaines de micromètres permettant de conférer de bonnes propriétés de dureté, de résistance à l'usure et à la corrosion mais également de résistance au feu. Ainsi, le procédé permet d'obtenir un matériau capable de résister à la déformation et d'isoler de la chaleur dégagée par une flamme lorsqu'il est soumis à des conditions extrêmes telles qu'une exposition à une flamme à plus de 1000°C.

Avantageusement et selon l'invention, ladite étape de traitement de ladite portion de surface en alliage d'aluminium comprend au moins les étapes suivantes:
- une étape d'immersion de ladite portion de surface en alliage d'aluminium dans un bain électrolytique composé d'une solution aqueuse comprenant des sels de sodium,
- une étape d'application d'un courant bipolaire pulsé à une densité de courant traversant ladite portion de surface en alliage d'aluminium comprise entre 20 A/dm² et 60 A/dm² pendant une durée supérieure à 20 minutes, de préférence comprise entre 30 minutes et 90 minutes.

Selon cette variante, ladite étape de traitement comprend une première étape d'immersion de ladite portion de surface en alliage d'aluminium dans un bain électrolytique composé d'une solution aqueuse comprenant des sels de sodium (silicates, aluminates, zirconates, titanates...) dont la nature conduit, lors du procédé d'oxydation micro-arcs, à la formation d'oxydes semi-cristallins permettant d'améliorer la résistance à la corrosion, à l'usure et au feu de la pièce. L'étape d'immersion consiste à mettre en contact une portion de surface oxydable, dit substrat, tel que l'alliage d'aluminium.

L'oxydation micro-arcs consiste à imposer une différence de potentiel entre le substrat formé de ladite portion de surface en alliage d'aluminium et une contre-électrode également immergée dans le bain électrolytique.

Le bain électrolytique comprend par exemple des silicates de sodium (Na₂Si0₃) présents en une concentration comprise entre 5 et 25 g/L et de l'hydroxyde de potassium (KOH) présent en une concentration comprise entre 1 et 10 g/L. Le pH du bain électrolytique est basique et compris entre 11 et 14, et la température du bain électrolytique est de l'ordre de 20°C avec une variation de ±10°C.

Une deuxième étape d'application d'un courant bipolaire pulsé permet la formation du revêtement céramique en tant que protection contre le feu, l'usure et la corrosion. Le courant appliqué est bipolaire pulsé de manière à ce que ladite pièce joue alternativement le rôle de cathode et d'anode.

L'étape d'application d'un courant bipolaire pulsé permet de former un revêtement sur la surface en alliage d'aluminium. Dès les premières secondes de l'application, une couche superficielle d'oxydes isolante se forme à la surface du substrat en alliage d'aluminium. L'énergie imposée est telle qu'elle provoque la rupture diélectrique de cette couche. La tension à laquelle ce phénomène apparaît est appelée tension de claquage. Les étincelles qui en résultent permettent au processus d'oxydation de se poursuivre. Ce phénomène se traduit par l'apparition de décharges semblant se déplacer sur la surface de la pièce traitée. La couche d'oxyde croît alors de façon relativement homogène sur toute la surface de la portion traitée. Au cours du traitement, les étincelles deviennent plus intenses et moins nombreuses avec la formation de la couche, on parle alors de micro-arcs puis d'arcs. Selon les conditions électriques choisies, la concentration en électrolyte, la nature du substrat et le temps de traitement, les épaisseurs de couche obtenues peuvent varier de 2 à 250 µm. Pour ce faire, une densité de courant est comprise entre 20 et 60 A/dm² et appliquée à une fréquence comprise entre 100 et 1000 Hz pendant une durée de traitement supérieure à 20 minutes, de préférence comprise entre 30 minutes et 90 minutes.

La particularité essentielle de l'oxydation micro-arcs réside donc dans la présence de décharges électriques conduisant, localement, à de très hautes températures (environ 2.104 K) et pressions (102 MPa). Ces élévations de température favorisent ainsi la formation de phases cristallisées. De plus, les mécanismes d'oxydation sont très complexes et conduisent à la formation de films d'oxydes cristallisés subdivisés en deux sous-couches : une couche superficielle très poreuse et une couche interne dense.

Cette technique permet de créer un revêtement ayant une structure et des propriétés physico-chimiques particulières par le biais de la formation de couches d'oxydes composées d'éléments constitutifs de l'alliage d'aluminium et de l'incorporation à la couche d'oxydes d'espèces telles que le(s) sel(s) de sodium contenu(s) dans le bain électrolytique permettant ainsi la formation du revêtement céramique sur la portion de surface en alliage d'aluminium traitée.

Avantageusement et selon l'invention, ladite étape d'application d'un courant bipolaire pulsé est réalisée à une densité de courant de l'ordre de 40 A/dm².

Avantageusement et selon l'invention, ledit procédé de fabrication comprend en outre une étape de sablage de la portion de surface traitée par ladite étape de traitement par oxydation micro-arcs.

Selon cette variante, ladite étape de sablage de la portion de surface traitée par ladite étape de traitement par oxydation micro-arcs permet d'éliminer la couche superficielle poreuse du revêtement formé sur la portion de surface traitée présentant des porosités de profondeurs variables. Il peut donc être bénéfique de polir la couche poreuse formée afin de rendre la surface nette et lisse. Le fait de traiter et de lisser ladite portion de surface permet d'éviter les turbulences de flux lorsque la vanne est agencée dans une conduite d'un système de conditionnement d'air. Ainsi, le passage du flux d'air est favorisé et amélioré lorsque ladite portion de surface de la vanne est traitée par une étape de sablage.

Avantageusement et selon l'invention, ledit procédé de fabrication comprend en outre, avant ladite étape de traitement par oxydation micro-arcs, une étape de dégraissage de la portion de surface en alliage d'aluminium.

Ladite étape de dégraissage de la portion de surface en alliage d'aluminium se fait en amont de l'étape de traitement par oxydation micro-arcs afin d'éliminer les impuretés pouvant être déposées sur ladite portion de surface à traiter. Le dégraissage peut être réalisé manuellement à l'aide d'acétone appliquée directement sur ladite portion de surface avant le traitement par oxydation micro-arc.

Selon une autre variante, le dégraissage peut être réalisé à l'aide de solvants (organiques halogénés ou non halogénés, solutions aqueuses alcalines). Une étape de décapage chimique (solution aqueuse acide) peut également être utilisée.

Avantageusement et selon l'invention, ledit procédé de fabrication comprend en outre une étape de projection thermique sur la portion de surface traitée par ladite étape de traitement par oxydation micro-arcs.

Selon l'invention, l'étape de projection thermique permet d'élaborer un revêtement céramique ayant de bonnes propriétés thermiques directement sur la portion de surface traitée par l'étape de traitement par oxydation micro-arcs. Le revêtement formé à la suite de l'étape de traitement par oxydation micro-arcs est utilisé en tant que couche de protection lors de la projection thermique mais aussi en tant que sous-couche d'accroche de la couche élaborée par projection thermique.

La projection thermique consiste à utiliser une source d'énergie thermique et cinétique pour fondre un matériau et l'accélérer vers un substrat. A l'impact, les particules fondues vont se déformer, s'étaler et se refroidir pour former des lamelles. La construction de la couche élaborée par projection thermique résulte de l'empilement de ces lamelles ainsi formées.

La projection thermique permet l'obtention d'un revêtement céramique en mettant en oeuvre par exemple, de la zircone stabilisée à l'yttrine (ZrO₂-Y2O₃) ou encore des pérovskites (BaZrO₃, CaZrO₃, SrZrO₃, LaAlO₃...). Ces oxydes présentent un réel intérêt pour la protection au feu. Cependant, ces oxydes ne peuvent pas être formés lors d'un traitement par oxydation micro-arcs ni être déposés par projection directe sur alliage d'aluminium. En effet, l'adhérence des couches élaborées par projection thermique est principalement d'origine mécanique et dépend, en très grande part, de la rugosité de la surface du substrat. Pour promouvoir ce type d'adhérence, il est souvent nécessaire de passer par une étape de préparation préalable. Il est également généralement nécessaire d'élaborer en surface de l'alliage métallique à traiter une couche de liaison permettant de protéger le substrat des températures atteintes lors de la projection (autour de 2000 °C) et d'assurer une compatibilité mécanique et chimique entre la couche céramique déposée et l'alliage métallique.

Aussi, la présence d'un revêtement obtenu à la suite de l'étape de traitement par oxydation micro-arcs permet de mettre en oeuvre la projection thermique sur un revêtement présentant une porosité et une rugosité suffisante pour permettre une bonne accroche mécanique du revêtement projeté. De plus, étant donné qu'il s'agit d'un assemblage de couches de même nature, céramique, la compatibilité chimique est également assurée.

Avantageusement et selon l'invention, la projection thermique est choisie parmi la projection plasma atmosphérique plus connue sous l'acronyme APS pour *Air Plasma Spraying,* la projection plasma de suspensions plus connue sous l'acronyme SPS pour *Suspension Plasma Spraying* et la projection plasma de solutions plus connue sous l'acronyme SPPS pour *Solution Precursor Plasma Spraying.*

Avantageusement et selon l'invention, ledit procédé de fabrication comprend en outre une étape d'application d'un revêtement sol-gel sur la portion de surface traitée par ladite étape de traitement par oxydation micro-arcs.

Selon l'invention, l'étape d'application d'un revêtement sol-gel sur la portion de surface traitée par l'étape de traitement par oxydation micro-arcs permet d'améliorer le rôle de barrière thermique du revêtement obtenu par oxydation micro-arcs.

Le revêtement formé à la suite de l'étape de traitement par oxydation micro-arcs est utilisé en tant que sous-couche d'accroche du revêtement sol-gel.

Une des méthodes de mise en forme connue par l' Homme de métier consiste dans un premier temps en la réalisation d'un gel contenant des poudres (par exemple la zircone yttriée YSZ) obtenues par hydrolyse et condensation. Après un séchage supercritique de ce gel, un aérogel de poudre nanométrique est obtenu. La poudre est alors dispersée en suspension et le dépôt sur le substrat métallique est réalisé par trempage-retrait avant recuit. Le revêtement formé à la suite de l'étape de traitement par oxydation micro-arcs permet une bonne adhérence du dépôt sol-gel mais aussi une protection de l'alliage d'aluminium pendant l'étape d'application d'un revêtement sol-gel au cours duquel le recuit est réalisé à des températures de l'ordre de 1000°C.

L'invention concerne également une pièce d'un système de conditionnement d'air d'un véhicule de transport aérien ou ferroviaire comprenant au moins une portion de surface en alliage d' aluminium caractérisée en ce que ladite pièce est obtenue par un procédé de fabrication selon l'invention pour la rendre résistante au feu.

En particulier, la portion de surface de la pièce du système de conditionnement d'air est traitée par oxydation micro-arcs en vue de l'obtention d'un revêtement céramique sur ladite portion de surface résistante au feu.

Selon l'invention, ladite pièce comprend une portion de surface ayant subi un traitement par oxydation micro-arcs afin de la rendre résistante au feu. Ladite pièce et notamment la portion de surface traitée par oxydation micro-arcs présente ainsi un revêtement céramique avec une résistance thermique notamment vis-à-vis du feu.

En outre, la pièce selon l'invention présente une très bonne tenue à la corrosion, une tenue à l'érosion et à l'usure, et une bonne tenue au feu.

La pièce selon l'invention forme une barrière thermique vis-à-vis du feu. La pièce selon l'invention permet également un gain de masse, de coût et de temps au montage.

Avantageusement et selon l'invention, ledit traitement de la portion de surface est configuré pour permettre à la pièce d'être résistante à des températures égales ou supérieures à 1000°C.

Selon l'invention, ladite pièce est résistante au feu et présente une résistance à des hautes températures pouvant être rencontrées dans un système de conditionnement d'air d'un véhicule de transport aérien ou ferroviaire.

Aussi, elle permet de résister à des valeurs de températures ayant des écarts variables voire extrêmes.

Avantageusement et selon l'invention, la pièce est une vanne comprenant un papillon en alliage d'aluminium formant ladite portion de surface traitée par oxydation micro-arcs.

Selon l'invention, ladite vanne est une vanne de régulation de flux d'air, agencée dans un système de conditionnement d'air d'un véhicule de transport aérien ou ferroviaire. La vanne de régulation est de type papillon, dont le papillon est en alliage d'aluminium traité par le procédé micro-arcs pour former un revêtement résistant au feu.

L'invention concerne également un système de conditionnement d'air d'un véhicule de transport aérien ou ferroviaire comprenant au moins une pièce selon l'invention.

Selon l'invention, ledit système de conditionnement d'air d'un véhicule de transport aérien ou ferroviaire présente donc une masse moins importante qu'un système de conditionnement d'air embarquant des pièces formées en acier inoxydable. Aussi, l'utilisation d'alliage en aluminium pour la fabrication de pièces permet de rendre le système de conditionnement d'air plus léger.

L'invention concerne également un véhicule de transport aérien ou ferroviaire comprenant au moins un moteur propulsif, une cabine et au moins un système de conditionnement d'air de ladite cabine selon l'invention.

Les avantages d'un tel procédé de fabrication selon l'invention s'appliquent *mutatis mutandis* à ladite pièce obtenue par le procédé selon l'invention, audit système de conditionnement d'air selon l'invention et audit véhicule de transport aérien ou ferroviaire selon l'invention.

L'invention concerne également un procédé de fabrication d'une pièce résistante au feu, une pièce d'un système de conditionnement d'air, un système de conditionnement d'air d'un véhicule de transport aérien ou ferroviaire, un véhicule de transport aérien ou ferroviaire, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un procédé de fabrication d'une vanne résistante au feu selon un mode de réalisation de l'invention ;
[Fig. 2] représente un graphique de l'évolution de la température de la face arrière d'un papillon ayant subi le procédé de fabrication par oxydation micro-arcs en fonction du temps d'exposition à une flamme de 1100°C ; et
[Fig. 3] est une vue schématique en perspective d'un aéronef selon un mode de réalisation de l'invention.

### Description détaillée d'un mode de réalisation de l'invention

Le procédé décrit ci-après permet la fabrication d'une vanne de régulation d'un flux d'air d'un système de conditionnement d'air de type vanne papillon qui est résistante au feu. Aussi, la portion de surface en alliage d'aluminium correspond à l'organe obturateur de la vanne papillon, c'est-à-dire le papillon.

Bien entendu, le procédé selon l'invention peut également s'appliquer à tout autre type de vanne, notamment des vannes à boisseau, des vannes à clapet, et à tout type de pièces dont la portion de surface est en alliage d'aluminium tel qu'un corps d'actionneur ou un corps de régulateur.

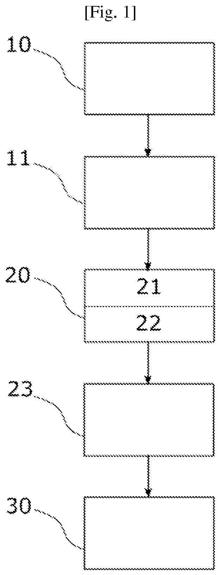

Le procédé de fabrication tel que représenté sur la figure 1 comprend les étapes suivantes :
- une étape 10 d'obtention d'une vanne papillon comprenant un papillon en alliage d'aluminium,
- une étape 11 de dégraissage du papillon en alliage d'aluminium,
- une étape 20 de traitement du papillon de la vanne par un traitement par oxydation micro-arcs comprenant une étape 21 d'immersion de la vanne papillon et une étape 22 d'application d'un courant électrique bipolaire pulsé pour obtenir la formation du revêtement céramique sur ledit papillon,
- une étape 23 de rinçage et de séchage de la vanne papillon, et
- une étape 30 de sablage du papillon de la vanne.

Selon ce mode de réalisation, l'étape 10 d'obtention de la vanne papillon à traiter consiste à être en possession d'une vanne papillon dont le papillon est en alliage d'aluminium et forme la portion de surface à traiter. Dans le cas présent, le papillon est isolé du corps de vanne afin d'être traité seul puis il est remonté sur le corps de vanne après le traitement.

L'étape 11 de dégraissage du papillon de la vanne papillon consiste à enlever les impuretés pouvant être déposées sur le papillon en alliage d'aluminium. Le dégraissage est réalisé manuellement à l'aide d'acétone appliqué directement sur le papillon.

L'étape 20 de traitement du papillon par oxydation micro-arcs comprend une étape 21 d'immersion dans un bain électrolytique et une étape 22 d'application d'un courant bipolaire pulsé pour former le revêtement céramique sur le papillon de la vanne.

L'étape 21 d'immersion consiste à mettre la vanne papillon dont uniquement le papillon en alliage d'aluminium est au contact direct d'un électrolyte, dans une solution aqueuse comprenant des silicates de sodium (Na₂SiO₃) et de l'hydroxyde de potassium (KOH).

L'étape 22 consiste à appliquer aux électrodes un courant bipolaire pulsé en utilisant un générateur spécifique appliquant une densité de courant de l'ordre de 40 A/dm² pendant une durée comprise entre 30 et 90 minutes. A la fin de l'étape 22, un revêtement céramique est formé sur le papillon.

L'étape 23 de rinçage et de séchage est réalisée avec de l'eau distillée permettant de rincer la portion traitée et d'éliminer l'électrolyte dans lequel la vanne papillon était immergée. Le séchage de la vanne papillon est ensuite effectué par air comprimé.

Le papillon subit une étape 30 de sablage superficiel du revêtement afin d'enlever les défauts superficiels du revêtement causés par les micro-arcs. Cette étape permet d'obtenir un revêtement sur le papillon lisse et sans imperfection favorisant le passage du flux.

Selon ce mode de réalisation, le revêtement céramique présente une épaisseur comprise entre 80 et 150 micromètres.

Des tests ont été réalisés sur des papillons revêtus pour démontrer l'efficacité d'un tel traitement par oxydation micro-arcs vis-à-vis de la résistance au feu.

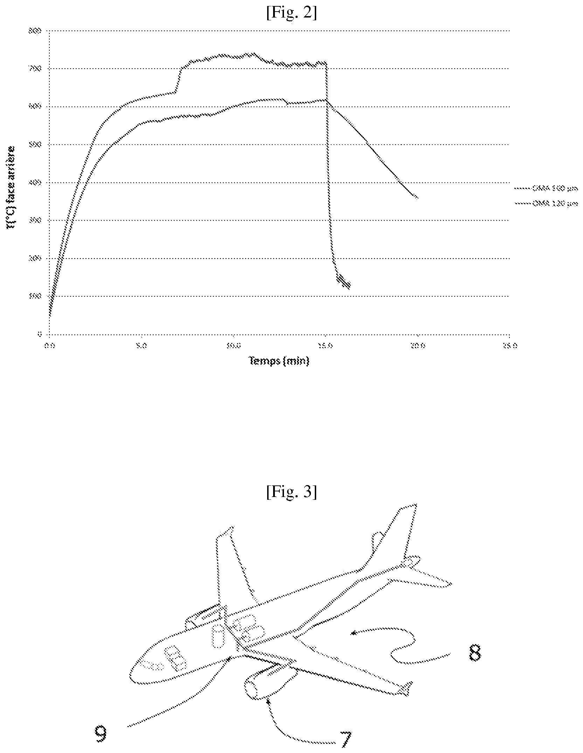

La figure 2 présente un graphique représentant l'évolution de la température de la face arrière d'un papillon en fonction du temps lorsque la face avant dudit papillon est soumise à une flamme de 1100°C pendant 15 minutes selon la norme ISO2685.

Deux papillons en alliage d'aluminium ont été traités par le procédé selon la figure 1. Le premier papillon possède un revêtement de 100 µm d'épaisseur, il correspond sur le graphique à la courbe haute « OMA 100 µm ». Le second papillon possède un revêtement de 120 µm d'épaisseur, il correspond sur le graphique à la courbe basse « OMA 120 µm ».

Chaque papillon est soumis à la flamme d'un brûleur kérosène type ISO 2685 pendant 15 minutes. La face exposée au feu est appelée face avant, la face non exposée est dite face arrière. Le brûleur se situe à une distance de 10 cm du papillon et la flamme du brûleur est en contact direct avec la surface de la face avant du papillon. Un thermocouple de surface (type K, classe 1) est positionné sur la face arrière afin de mesurer la température de la face arrière tout au long de l'essai feu. La température de la flamme a été étalonnée avant l'essai et est de 1100°C +/-100°C.

Le graphique représente l'évolution de la température de la face arrière pendant l'essai feu. On constate que le revêtement permet de diminuer la température ressentie par l'alliage d'aluminium de l'ordre de 500°C pour le revêtement le plus épais. Lorsque la flamme est appliquée sur la face avant des papillons « OMA 120 µm » et « OMA 100 µm », la face arrière de chaque papillon chauffe jusqu'à atteindre une valeur respective d'environ 600°C et 700°C. La température mesurée sur la face arrière reste globalement constante lorsqu'une flamme à 1100°C est maintenue pendant 15 minutes au niveau de la face avant de chaque papillon.

Ce graphique met en évidence la résistance au feu et à la flamme d'un papillon en alliage d'aluminium ayant été traité selon le procédé de la figure 1 avec l'oxydation micro-arcs.

Le revêtement céramique élaboré par le procédé de la figure 1 d'oxydation micro-arcs permet d'obtenir des vannes papillon revêtues d'un alliage en aluminium résistantes au feu.

La figure 3 illustre un véhicule 8 de transport aérien qui comprend un moteur 7 propulsif, une cabine et au moins un système 9 de conditionnement d'air de ladite cabine qui comprend une vanne papillon obtenue selon le procédé de la figure 1. Ainsi, la vanne papillon peut être agencée dans des conduites du système de conditionnement d'air embarqué dans un aéronef, afin de réguler les flux d'air, tout en étant résistante au feu. Dans le cas d'un déclenchement d'un feu dans l'environnement moteur, la vanne papillon de régulation agencée dans les conduites du système de conditionnement d'air d'un aéronef permet d'isoler et d'empêcher le feu de se propager par le biais des conduites de circulation d'air.

## Revendications

1. Procédé de fabrication d'une pièce résistante au feu d'un système (9) de conditionnement d'air d'un véhicule (8) de transport aérien ou ferroviaire **caractérisé en ce qu'**il comprend au moins les étapes suivantes :
- une étape (10) d'obtention d'une pièce comprenant au moins une portion de surface en alliage d'aluminium,
- une étape (20) de traitement de ladite portion de surface en alliage d'aluminium par oxydation micro-arcs en vue de l'obtention d'un revêtement céramique sur ladite portion de surface,
- une étape (30) de sablage de la portion de surface traitée par ladite étape de traitement par oxydation micro-arcs.

2. Procédé de fabrication d'une pièce selon la revendication 1, **caractérisé en ce que** ladite étape (20) de traitement de ladite portion de surface en alliage d'aluminium comprend au moins les étapes suivantes :
- une étape (21) d'immersion de ladite portion de surface en alliage d'aluminium dans un bain électrolytique composé d'une solution aqueuse de silicate de sodium,
- une étape (22) d'application d'un courant bipolaire pulsé à une densité de courant traversant ladite portion de surface en alliage d'aluminium comprise entre 20 A/dm² et 60 A/dm² pendant une durée supérieure à 20 minutes, de préférence comprise entre 30 minutes et 90 minutes.

3. Procédé de fabrication d'une pièce selon la revendication 2, **caractérisé en ce que** ladite étape (22) d'application d'un courant bipolaire pulsé est réalisée à une densité de courant de l'ordre de 40 A/dm².

4. Procédé de fabrication d'une pièce selon l'une des revendications 1 à 3, **caractérisé en ce qu'**il comprend en outre une étape de projection thermique sur la portion de surface traitée par ladite étape de traitement par oxydation micro-arcs.

5. Procédé de fabrication d'une pièce selon la revendication 4, **caractérisé en ce que** la projection thermique est choisie parmi la projection plasma atmosphérique (APS), la projection plasma de suspensions (SPS) et la projection plasma de solutions (SPPS).

6. Procédé de fabrication d'une pièce selon l'une des revendications 1 à 5, **caractérisé en ce qu'**il comprend en outre une étape d'application d'un revêtement sol-gel sur la portion de surface traitée par ladite étape de traitement par oxydation micro-arcs.

7. Pièce d'un système (9) de conditionnement d'air d'un véhicule (8) de transport aérien ou ferroviaire comprenant au moins une portion de surface en alliage d'aluminium **caractérisée en ce que** ladite pièce est obtenue par un procédé de fabrication selon l'une des revendications 1 à 6 pour la rendre résistante au feu.

8. Pièce selon la revendication 7, **caractérisée en ce que** ladite pièce est une vanne comprenant un papillon en alliage d'aluminium formant ladite portion de surface traitée par oxydation micro-arcs.

9. Système (9) de conditionnement d'air d'un véhicule (8) de transport aérien ou ferroviaire **caractérisé en ce qu'**il comprend au moins une pièce selon l'une des revendications 7 ou 8.

10. Véhicule (8) de transport aérien ou ferroviaire comprenant au moins un moteur (7) propulsif, une cabine et au moins un système (9) de conditionnement d'air de ladite cabine, **caractérisé en ce que** le système de conditionnement d'air de la cabine est le système de conditionnement d'air selon la revendication 9.

## Patentansprüche

1. Verfahren zur Herstellung eines feuerfesten Teils einer Klimaanlage (9) für ein Luft- oder Schienentransportfahrzeug (8), **dadurch gekennzeichnet, dass** es mindestens die folgenden Schritte umfasst:
- einen Schritt (10), des Erhaltens eines Teils, das mindestens einen Oberflächenabschnitt aus einer Aluminiumlegierung aufweist,
- einen Schritt (20) des Behandelns des Oberflächenabschnitts aus der Aluminiumlegierung mit Mikrobogenoxidation, um eine Keramikbeschichtung auf dem Oberflächenabschnitt zu erhalten,
- einen Schritt (30) des Sandstrahlens des mit dem Mikrobogenoxidationsbehandlungsschritt behandelten Oberflächenabschnitts.

2. Verfahren zur Herstellung eines Teils nach Anspruch 1, wobei der Schritt (20) des Behandelns des Oberflächenabschnitts aus Aluminiumlegierung mindestens die folgenden Schritte umfasst:
- einen Schritt (21) des Eintauchens des Oberflächenteils der Aluminiumlegierung in ein elektrolytisches Bad, das eine wässrige Lösung von Natriumsilikat enthält,
- einen Schritt (22) des Anlegens eines gepulsten bipolaren Stroms mit einer Stromdichte, die durch den Oberflächenabschnitt der Aluminiumlegierung verläuft, zwischen 20 A/dm² und 60 A/dm² für eine Dauer von mehr als 20 Minuten, vorzugsweise für eine Dauer zwischen 30 Minuten und 90 Minuten.

3. Verfahren zur Herstellung eines Teils nach Anspruch 2, wobei der Schritt (22) des Anlegens eines gepulsten bipolaren Stroms mit einer Stromdichte in der Größenordnung von 40 A/dm² durchgeführt wird.

4. Verfahren zur Herstellung eines Teils nach einem der Ansprüche 1 bis 3, wobei dieses ferner einen Schritt des thermischen Spritzens auf dem mit dem Schritt der Mikrobogenoxidationsbehandlung behandelten Oberflächenabschnitt umfasst.

5. Verfahren zur Herstellung eines Teils nach Anspruch 4, **dadurch gekennzeichnet, dass** das thermische Spritzen ausgewählt ist unter atmosphärischem Plasmaspritzen (APS), Suspensionsplasmaspritzen (SPS) und Lösungsvorläuferplasmaspritzen (SPPS).

6. Verfahren zur Herstellung eines Teils nach einem der Ansprüche 1 bis 5, wobei dieses ferner einen Schritt des Aufbringens einer Sol-Gel-Beschichtung auf den mit dem Mikrobogenoxidationsbehandlungsschritt behandelten Oberflächenabschnitt umfasst.

7. Teil einer Klimaanlage (9) für ein Luft- oder Schienenfahrzeug (8), welches mindestens einen Oberflächenabschnitt aus einer Aluminiumlegierung umfasst, **dadurch gekennzeichnet, dass** das Teil durch ein Herstellungsverfahren nach einem der Ansprüche 1 bis 6 hergestellt wird, um es feuerbeständig zu machen.

8. Teil nach Anspruch 7, worin es sich bei dem Teil um ein Ventil handelt, das eine Absperrklappe aus einer Aluminiumlegierung umfasst, die den mit Mikrolichtbogenoxidation behandelten Oberflächenbereich bildet.

9. Klimaanlage (9) für ein Luft- oder Schienenfahrzeug (8), welche mindestens ein Teil nach einem der Ansprüche 7 oder 8 umfasst.

10. Luft- oder Schienentransportfahrzeug (8) mit mindestens einem Antriebsmotor (7), einer Kabine und mindestens einer Klimaanlage (9) für die Kabine, **dadurch gekennzeichnet, dass** die Klimaanlage für die Kabine die Klimaanlage nach Anspruch 9 ist.

## Claims

1. Method for manufacturing a fire-resistant part of an air conditioning system (9) for an air or rail transport vehicle (8), **characterized in that** it comprises at least the following steps:
- a step (10) of obtaining a part comprising at least one aluminum alloy surface portion,
- a step (20) of treating said aluminum alloy surface portion with micro-arc oxidation in order to obtain a ceramic coating on said surface portion,
- a step (30) of sandblasting the surface portion treated with said micro-arc oxidation treatment step.

2. Method for manufacturing a part according to claim 1, wherein said step (20) of treating said aluminum alloy surface portion comprises at least the following steps:
- a step (21) of immersing said aluminum alloy surface portion in an electrolytic bath comprising an aqueous solution of sodium silicate,
- a step (22) of applying a pulsed bipolar current at a current density passing through said aluminum alloy surface portion of between 20 A/dm² and 60 A/dm² for a period of more than 20 minutes, preferably for a duration between 30 minutes and 90 minutes.

3. Method for manufacturing a part according to claim 2, wherein said step (22) of applying a pulsed bipolar current is carried out at a current density of the order of 40 A/dm².

4. Method for manufacturing a part according to one of claims 1 to 3, wherein it further comprises a step of thermal spraying on the surface portion treated with said micro-arc oxidation treatment step.

5. Method for manufacturing a part according to claim 4, **characterized in that** the thermal spraying is chosen from amongst atmospheric plasma spraying (APS), suspension plasma spraying (SPS) and solution precursor plasma spraying (SPPS).

6. Method for manufacturing a part according to one of claims 1 to 5, **characterized in that** it further comprises a step of applying a sol-gel coating onto the surface portion treated with said micro-arc oxidation treatment step.

7. Part of an air conditioning system (9) for an air or rail transport vehicle (8) comprising at least one aluminum alloy surface portion, **characterized in that** said part is obtained by a manufacturing method according to one of claims 1 to 6 to make it resistant to fire.

8. Part according to claim 7, **characterized in that** said part is a valve comprising an aluminum alloy butterfly valve forming said surface portion treated with micro-arc oxidation.

9. Air conditioning system (9) for an air or rail transport vehicle (8), comprising at least one part according to one of claims 7 or 8.

10. Air or rail transport vehicle (8) comprising at least one propulsion engine (7), a cabin and at least one air conditioning system (9) for said cabin, **characterized in that** the air conditioning system for the cabin is the air conditioning system according to claim 9.
